(19) Europäisches Patentamt
European Patent Office
Office européen des brevets

(11) **EP 1 962 539 A1**

(12) **EUROPEAN PATENT APPLICATION**

(43) Date of publication:
**27.08.2008 Bulletin 2008/35**

(51) Int Cl.:
*H04Q 7/38* (2006.01)

(21) Application number: **07003817.9**

(22) Date of filing: **23.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Nokia Siemens Networks GmbH & Co. KG**
**81541 München (DE)**

(72) Inventors:
• **Kim, Jee Hyun**
**80796 München (DE)**
• **Schulz, Egon, Dr.**
**80993 München (DE)**
• **Zirwas, Wolfgang**
**81249 München (DE)**

(54) **Method for providing channel information in a radio communications system and mobile station thereof**

(57) Method and Mobile Station thereof for providing feedback in a radio communications system between at least one mobile station of a plurality of mobile stations and at least one base station of a plurality of base stations, comprising the steps of:
- measuring by said at least one mobile station, of at least one channel characteristic of a downlink channel;
- quantising by said at least one mobile station, said at least one channel characteristic using at least one code selected from a codebook, said codebook comprising a plurality of codes, and
- transmitting by said at least one mobile station, of information relating to said at least one selected code, said information being a subset of a group of parameters of said at least one selected code.

FIG 1

1000

**Description**

**Field of the invention**

The invention is used in radio communications systems to ensure that channel information is provided transmissions between neighbouring nodes are controlled.

**Summary of the invention**

Cooperative antenna (COOPA) systems have recently increased in importance, as they promise significantly higher performance than conventional cellular or radio communications systems. The gain is acquired by adopting intercell interference (ICI) cancellation schemes, e.g., joint transmission/joint detection (JT/JD) algorithms. In COOPA, several adjacent BSs (base stations) are cooperating so as to support multiple MSs (mobile stations) which are located in the corresponding cooperative area (CA), which can comprise of a number of cells. Therefore, COOPA can be regarded as multi-user multiple-input multiple-output (MU-MIMO) systems, with multiple transmit antennas at the BS, which are conventionally considered to be located in one BS, spread over several BSs. This distributed nature, which is attributed to the fact that several geographically distributed BSs are used as transmit antennas, leads to full macro diversity gains. Besides this, COOPA systems have advantageous features compared with conventional cellular systems, like increased spatial dimensional efficiency, better ICI cancellation performance, the rank enhancement effect of the channel matrix, etc.

COOPA systems are based on the cooperation between multiple distributed BSs. This means that COOPA systems need a fast and efficient backbone network as well as a fast and efficient central unit (CU) which manages the cooperation amongst associated BSs. The CU makes the overall network structure more complex by adding one more layer in the hierarchy, and eventually increases the costs.

Furthermore, MIMO (multiple-input multiple-output) systems are known to have an increased gain when the transmitter, for example a BS is provided with channel information. In case of downlink transmission, a BS needs downlink channel information in order to transmit precoding processing. Frequency division duplex (FDD) systems make downlink channel estimation by using DL/UL (downlink/uplink) channel reciprocity impossible. Even for time division duplex (TDD) systems, this method is not enough for all BSs to get all necessary channel information due to the distributed nature of cooperating BSs for cooperative antenna (COOPA) systems.

One of the main challenges of the distributed COOPA system is channel estimation for downlink channel. All of the involved BSs in CA need to know the full channel state information to calculate corresponding precoding weight matrix, so as to ensure that transmissions are received by MSs.

One way in which this issue has been dealt with is to use, in distributed COOPA systems, an analogue pilot retransmission method. It uses an indirect way of downlink channel estimation but is vulnerable to noise enhancement effects as well as achieving a throughput of 40% of that of ideal case, further necessitating supplementary feedback schemes in order to provide correct feedback to the BSs.

Another way that has been proposed is to quantize the downlink channel matrix. The channel matrix representing the downlink channel is viewed as a set of complex numbers and each and every complex number is encoded individually. However, this solution requires a lot of uplink resources to be available at an MS. This reduces the efficiency of an MS as less resources are available for transmitting data from the MS to the BS. Such a lack of resources will also increase the amount of time necessary to transmit data thus further reducing the efficiency of the MS as well as the efficiency of the radio communications system and of the different services provided.

A need therefore exists for a technique that resolves the above mentioned issues in an efficient manner. With the present invention, the above mentioned issues are resolved. The technique is achieved by the teachings contained in the independent claims. Preferred embodiments and further advantages of the invention are described in the dependent claims.

Said independent method provides feedback in a radio communications system between at least one mobile station of a plurality of mobile stations and at least one base station of a plurality of base stations, comprising the steps of:

- measuring by said at least one mobile station, of at least one channel characteristic of a downlink channel;
- quantising by said at least one mobile station, said at least one channel characteristic using at least one code selected from a codebook, said codebook comprising a plurality of codes, and
- transmitting by said at least one mobile station, of information relating to said at least one selected code, said information being a subset of a group of parameters of said at least one selected code.

Said independent mobile station is adapted to provide feedback in a radio communications system comprising means arranged to execute the steps of method claim 1.

With the proposed invention, a better and more efficient feedback is achieved. The feedback provided does not require a large amount of resources to be allocated for the transmission. In addition, by using a subset of the parameters of the code that is selected a reduction of the overhead for the transmission is achieved, which further increases the efficiency of the radio communications system.

Furthermore, the proposed invention provides a powerful tool to convey downlink channel information from MSs to BS (s), which is required to calculate a transmit precoding matrix. Furthermore, the proposed scheme can be used for cellular or radio based MUMIMO systems as well, involving one BS for downlink data transmission.

## Short description of the drawings

The present invention will become more apparent from the description given herein below by way of illustration only, and thus are not limitative of the present invention and wherein:

Fig. 1 depicts a radio communications system 1000, wherein the inventive technique is applicable.

Fig. 2, illustrates a flow chart depicting the steps performed by the inventive technique.

Fig. 3 depicts in block diagram form an arrangement of means for executing the inventive technique.

Fig. 4 depicts a section of a cooperative area topology in radio communications system 1000.

Fig. 5 depicts simulation results for a 2 BSs - 2 MSs case.

Fig. 6 depicts simulation results for a 3 BSs - 2 MSs case.

Fig. 7 depicts a performance comparison result between the inventive technique and a conventional technique.

## Detailed description of the invention

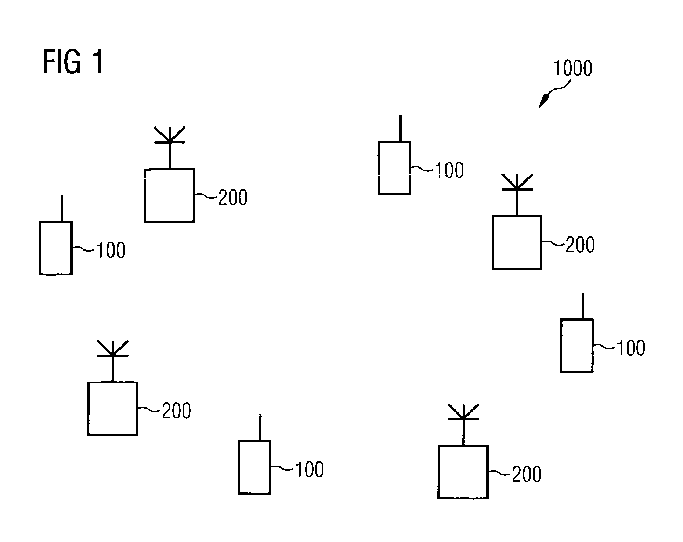

Fig. 1 depicts a radio communications system 1000, wherein the inventive technique is applicable. Radio communications system 1000 comprises of a plurality of mobiles stations (MS) 100 and a plurality of base stations 200 (BS). In one embodiment of the inventive technique, BSs 200 co-operate between each other in a COOPA system. A person skilled in the art would be aware that it is also possible to have more than one COOPA systems present in a radio communications system 1000. BSs 200 can be at least one of the following: a base station, an access point, a nodeB, a BSC (base station controller), a RNC (radio network controller). In one embodiment of the inventive technique OFDMA (Orthogonal Frequency Division Multiple Access) techniques are used.

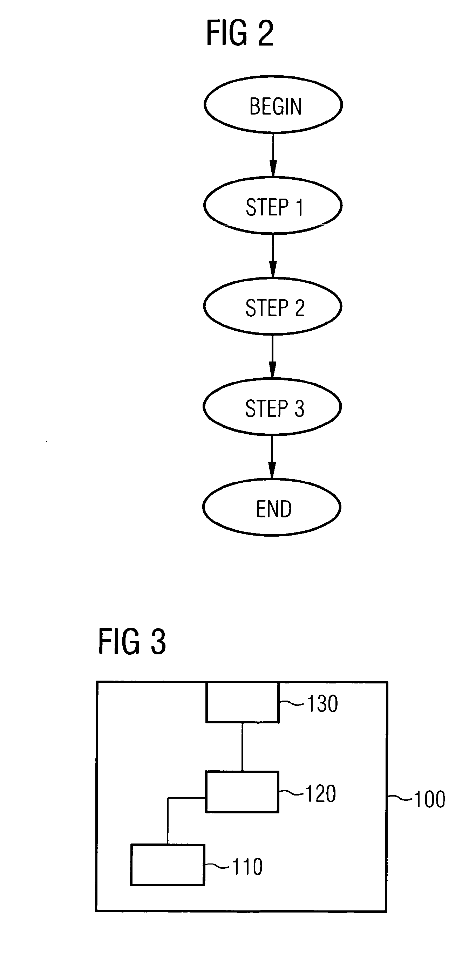

Fig. 2, illustrates a flow chart depicting the steps performed by the inventive technique. In step 1 a MS 100, in order to provide feedback to at least one base station of a plurality of base stations measures at least one channel characteristic of a downlink channel. The channel characteristic can be at least one of the following: a channel quality indicator (CQI), a channel power indicator, a signal to interference plus noise power ratio (SINR) measurement. In step 2 the MS 100 quantises the measured channel characteristic using at least one code selected from a codebook, the codebook comprising of a plurality of codes. A subspace distance metric is used when executing the quantisation. In step 3, the MS 100 then transmits via a broadcast channel or a control channel, information that relates to the code selected. The information transmitted forming a subset of a group of parameters of the selected code. In one embodiment the subset relates to an index of the selected code in the codebook.

Upon reception of the information from each MS 100, BSs 200 can then retrieve the code from the codebooks that they have stored and use the code as a weighting factor to perform beam forming. In this way BSs 200 can ensure that transmissions are received at MSs 100 at a power level that allows the MS 100 to be in the position to decode the transmission without errors. As the information is broadcast or transmitted over a control channel, all BSs 200 that are part of the cooperative antenna system can receive the information and form a clear picture of the radio channel characteristics throughout the radio communications system 1000. Furthermore, in another alternative embodiment, it is also possible for the MS 100 to transmit directly to its serving BS 200 the information and in turn, the BS 200 to then transmit the received information to BSs 200 that are within the COOPA system. The codebook used, is known to both MSs 100 and BSs 200. It can be predefined by a network operator and provided to all units within the radio communications system 1000. If an MS 100 does not have the codebook it can request it from its serving BS 200.

Fig. 3 depicts in block diagram form the means that are arranged to execute the inventive technique in a MS 100. A BS 200 also has appropriate means to receive, retrieve and further process the information transmitted from MS 100. The inventive technique can be implemented, for example, in a ASIC (application specific integrated circuit), a microcomputer. When implementing the inventive technique a programming language, for example C or C++ can be used to programme the necessary software components.

MS 100 comprises of storage means 110 for storing the codebook. Storage means 110 can be for example a computer memory card. Control means 120 arranged to control the MS 100 as well as, to measure at least one channel characteristic of a downlink channel and to execute the quantisation using a code from the codebook. The control means 120 are arranged to measure at least one of the following: a channel quality indicator, a channel power indicator of a received transmission, a signal to interference plus noise measurement, on a transmission received by transceiver means 130. Control means 120 are further arranged to retrieve codes from storage means 110. Control means 120 are further arranged to provide transceiver means 130 with the appropriate information for transmittal. That is control means 120 are further arranged to select information that is a subset of a group of parameters of the selected code. As mentioned herein above, in one embodiment the subset selected is an index of the selected code in the codebook.

The inventive technique is further explained herein below, wherein the following notation is used:

Vectors and matrices are denoted by lower case bold and capital bold letters, respectively. $(\cdot)^T$ and $(\cdot)^H$ denote transpose and Hermitian transpose, respectively. $\mathrm{tr}(\cdot)$ denotes the trace of a matrix. $\| \cdot \|$ and $\| \cdot \|_F$ denote the two-norm of a vector or a matrix and the Frobenius norm of a matrix, respectively. The covariance matrix of the vector process x is denoted by $R_x = E[xx^H]$, where $E[\cdot]$ is used for expectation. IN is the N x N identity matrix and $O_{M \times N}$ stands for an all-zero matrix of size MxN. $I_{M \times N}$ is defined as

$$\mathbf{I}_{\mathrm{M} \times \mathrm{N}} \; := \; \begin{bmatrix} \mathbf{I_N} \\ 0_{(\mathrm{M-N}) \times \mathrm{N}} \end{bmatrix}$$

for M > N.

$[\mathbf{A}]_{i,j}$ stands for the $(i,j)^{\mathrm{th}}$ entry of a matrix $\mathbf{A}$. $|S|$ is the size of a set S.

A precoded MU-MIMO system in which a group of BSs 200 transmit data to multiple MSs 100 simultaneously. $N_{BS}$ BSs and $N_{Ms}$ MSs have $N_t$ (transmit) and $N_r$ (receive) antennas each, respectively.

The data symbol block, $s = [s_1, \dots , s_{Ntr}]^T$ where
$N_{tr} = N_{MS}N_r$, is precoded by a $N_{tt} \times N_{tr}$ matrix W where
$N_{tt} = N_{BS}N_t$. Here the first $N_r$ data symbols are intended
for the first user or MS 100, the next $N_r$ symbols for the second user or MS 100, and so on. When denoting $i_{BS}/i_{MS}$ as the BS/MS index and $i_t/i_r$ as the transmit/receive antenna index, respectively, we can denote $h_{ij}$ where $i = N_r(i_{MS}-1)+i_r$, $j = N_t(i_{BS}-1)+i_t$ as the channel coefficient between the $i_r^{\mathrm{th}}$ receive antenna of the $i_{MS}^{\mathrm{th}}$ MS and the $i_t^{\mathrm{th}}$ transmit antenna of the $i_{Bs}^{\mathrm{th}}$ BS. The $N_{tr}N_{tt}$ channel coefficients can be expressed as the $N_{tr} \times N_{tt}$ channel matrix H with $[\mathbf{H}]_{i,j} = h_{ij}$. The received signals on $N_{tr}$ receive antennas which are collected in the vector y can be formulated as

$$\mathbf{y} \; = \; \mathbf{HWs} \; + \; \mathbf{n} \quad (1)$$

where n is the additive white Gaussian noise (AWGN). A transmit zero-forcing filter which completely suppresses the interference at the receiver, is used:

$$\{\mathbf{W}, \; g\} \; = \; \arg\min_{\{W,g\}} |g|^2 \mathrm{tr}(\mathbf{R}_n)$$

$$\mathrm{s.t.:} \; g\mathbf{HW} = \mathbf{I}_{Ntr} \text{ and } \mathrm{tr}(\mathbf{WR_sW}^H) \; = \; P_{tx} \quad (2)$$

where $P_{tx}$ is the maximum transmit power. The transmit precoding matrix W which satisfies the design criteria (2) is as follows:

$$\mathbf{W} = g^{-1}\mathbf{H}^{H}(\mathbf{H}\mathbf{H}^{H})^{-1}$$

$$g = ((tr(\mathbf{H}\mathbf{H}^{H})^{-1}\mathbf{R_s})/P_{tr})^{1/2} \quad (3)$$

The challenge here is that BSs 100 should know the downlink channel matrix H so as to construct the precoding matrix W. The analogue pilot retransmission method has been proposed as a way of transferring channel state information, however the analogue pilot retransmission method is vulnerable to noise enhancement effects and this weakness brings about a significant performance degradation, even though it is efficient in terms of required resources. As a way of combating noise, the digital method can be used instead of the analogue method. The digital method here means that MSs 100 measure the downlink channel and encode this information into the digital code and send it back to the BSs 200 after performing appropriate digital signal processing (modulation, spreading, repetition, or channel coding, etc) to guarantee robust data transmission.

Thus it is more feasible for each individual MS 100 to quantize a channel matrix within the scope of itself and send it back to all associated BSs 200 via a broadcast transmission over a broadcast channel or a control channel. The BSs 200 can then calculate the precoding matrix by making use of channel information reconstructed by the collected feedback messages.

There are several ways of quantizing channel matrix. A straightforward way is to view the channel matrix as a set of complex numbers, and to encode every complex number individually.

If we allocate $N_b$ bits for representing one floating point number, we need $2N_bN_{MS}N_rN_{BS}N_t$ bits in total for every subcarrier. This however imposes a high cost on the overhead required. The alternative is to view the channel matrix as a set of complex matrices, and to quantize individual matrix by looking up a predefined codebook. As mentioned above, the overall channel matrix is $N_{MS}N_r \times N_{BS}N_t$ matrix, and is composed of the channel matrix for each user or MS 100, which is $N_r \times N_{BS}N_t$ matrix.

Equation (4) depicts this relationship. Here $\mathbf{H}_j$ is the transpose of the channel matrix for user $j$, which is $N_{BS}N_t \times N_r$ matrix.

If we allocate $N_{cb}$ bits for the codebook, we need $N_{cb}N_{MS}$ bits in total for every subcarrier.

$$\mathbf{H} = [\mathbf{H}_1, \ldots, \mathbf{H}_j, \ldots, \mathbf{H}_{NMS}]^T, \quad j: \text{user or MS 100 index} \quad (4)$$

The channel quantization method is suitable for the limited feedback in terms of required feedback bits, and the conventional vector quantization (VQ) method can also be applied.

As mentioned herein above, MS $j$ 100 is supposed to quantize its channel matrix $\mathbf{H}_j$. $\mathbf{H}_j$ not viewed just as a complex matrix but as a subspace which is spanned by it. A singular value decomposition (SVD) is executed to extract the unitary matrix $\mathbf{U}_j$ which includes the basis vectors $\mathbf{U}_{j,s}$ spanning the column space of:

$$\mathbf{H}_j \ (\mathbf{H}_j: N_{tt} \times N_r, \ \mathbf{U}_j: N_{tt} \times N_{tt}, \ \mathbf{U}_{j,s}: N_{tt} \times N_r).$$

$$\mathbf{H}_j = \mathbf{U}_j \sum_j V_j^H \quad (5)$$

$$\mathbf{U}_j = [\mathbf{U}_{j,s}\mathbf{U}_{j,0}] \quad (6)$$

The channel quantizer uses the chordal distance (also known as the subspace distance metric) as a distance metric, since the distance between subspaces is measured. There are other subspace distance metrics, but the chordal distance is the only one which makes the VQ algorithm feasible for designing the codebook. The chordal distance is defined as:

$$d_c(\mathbf{T}_i, \mathbf{T}_j) = \frac{1}{\sqrt{2}} || T_i \, T_i^H - T_i \, T_j^H ||_F \quad (7)$$

for matrices $\mathbf{T}_i$, $\mathbf{T}_j$ which have orthonormal columns. The quantization of column space basis vectors $\mathbf{U}_{j,s}$ is chosen to be the code which has the minimum chordal distance with it. Thus, the subspace quantization process can be written as:

$$\hat{\mathbf{U}}_{j,s} = Q(\mathbf{U}_{j,s}) = \arg \min_{C_i \in C} d_c(\mathbf{U}_{j,s}, \mathbf{C}_i) \quad (8)$$

where $C_i$ is an unitary matrix $(C_i^H \, \mathbf{C}_i = \mathbf{I}_{Nr})$. Thus, the code represents only the direction of column space of $\mathbf{H}_j$ and the channel quantizer needs extra information to convey the channel power information. The channel quantizer equation at user or MS 100 $j$, which takes channel powers as well as subspace distances into account, is given by:

$$\hat{H}_j = \hat{\mathbf{U}}_{j,s} \sum_{j,S} \quad (9)$$

where

$$\sum_{j,S} = \begin{bmatrix} \Sigma_{j,S} \\ 0_{(Ntt - Nr) \times Nr} \end{bmatrix}$$

Here, C is the codebook of size N (N = $2^{Ncb}$) which has the code $\mathbf{C}_i \in C^{Ntt \times Nr}$.

$\Sigma_{j,S} \in R^{Nr \times Nr}$ is composed of upper $N_r$ x $N_r$ elements of $\Sigma_j \cdot \Sigma_{j,s}$ is a diagonal matrix which has $N_r$ positive real elements in its diagonal. This constitutes the channel power information. The subspace based channel quantization method works as follows. MS 100 $j$ finds the code $C_i$ which provides the minimum chordal distance or subspace distance metric with $\mathbf{U}_{j,s}$, and corresponding power information such as channel power information. Then it sends back $N_{cb}$ bit codebook index together with $N_r$ power information to all associated BSs 200. The reconstructed downlink channel matrix at BSs 200 is as follows.

$$\hat{H} = [\hat{H}_1, \cdots, \hat{H}_j, \cdots, \hat{H}_{NMS}]^T, \ j: \text{user or MS 100}$$

$$\text{index} \quad (10)$$

The code index alone is enough to achieve potential performances without extra channel power information when link strengths (large-scale fading due to path loss and shadowing) are given to BSs 200. In this case, MS 100 needs to send only $N_{cb}$ bit feedback. The channel quantization formula is expressed as:

$$\hat{H}_j = \hat{U}_{j,s} = \arg\min_{Ci \in C} d_c(U_{j,s}, C_i) \quad 11$$

The Linde, Buzo, and Gray (LBG) vector quantization (VQ) algorithm is used to construct the codebook C. The LBG VQ algorithm is an iterative algorithm based on the Lloyd algorithm which is known to provide an alternative systematic approach for the subspace packing problem. The codebook is acquired through iteration. The main difference of the proposed method is attributed to the fact that codebooks are not precoder codebooks, but are constructed channel quantizer codebooks.

The LBG VQ algorithm is based on a training sequence which is provided by channel realizations simulated in Monte-Carlo approach, whereas the Lloyd algorithm is based on an initial codebook which is obtained via random computer search or the currently best codebook. Thus, codebooks obtained by the LBG VQ algorithm can better capture statistics of the channel by using channel realizations as a training sequence.

**Codebook Design**

The LBG VQ based codebook C design is as follows. Given a source vector with its statistical properties known, given a distortion measure, given a codebook evaluation measure, and given the size of the codebook, a codebook and a partition which result in maximizing the minimum chordal distance of the codebook is required.

For a training sequence T of which the element is the column space basis vectors $U_{j,s}$ of size $N_{tt} \times N_r$:

$$T = \{X_1, X_2, \cdot \cdot, X_M\} \quad (12)$$

where $X_m \in C^{N_{tt} \times N_r}$ is a sample of $U_{j,s}$ which can be obtained by taking SVD of the channel matrix $H_j$. The channel matrix samples are generated by Monte-Carlo simulation which follows SCMe. The number of channel samples M is assumed to be large (e.g., $M \geq 1000N$), so that all the statistical properties of the source are captured by the training sequence. The codebook can be represented as the following:

$$C = \{C_1, C_2, \cdot \cdot \cdot, C_N\} \quad (13)$$

Each code has the same size as a training vector ($C_n \in C^{N_{tt} \times N_r}$). Let $R_n$ be the encoding region associated with code $C_n$ and let

$$P = \{R_1, R_2, \cdot \cdot \cdot, R_N\} \quad (14)$$

denote the partition of the space. If the source vector $X_m$ belongs to the encoding region $R_n$, then it is quantized to $C_n$:

$$Q(X_m) = C_n, \text{ if } X_m \in R_n \quad (15)$$

The aim is to find a codebook of which the minimum chordal distance is maximized. The minimum chordal distance of the codebook is given by:

$$d_{c,min}(C) := \text{min} d_c \ (C_i, C_j), \quad \text{for } C_i, \ C_j \in C, \quad \forall i \neq j \quad (16)$$

The codebook design problem can be stated as follows: Given T and N, find C and P such that $d_{c,min}(C)$ is maximised.

C and P must satisfy the following two criteria so as to solve the above mentioned design problem. It should be noted that the chordal distance is used instead of the Euclidean distance as a distance metric.

• *Nearest Neighbour Condition:*

$$R_n = \{\mathbf{X}: \ d_c(\mathbf{X}, \ C_n) \ < \ d_c \ (\mathbf{X}, \ C_{n'}), \quad \forall n' \neq n\} \quad (17)$$

This condition says that any channel sample X, which is closer to the code $C_n$ than any other codes in the chordal distance sense, should be assigned to the encoding region $R_n$, and be represented by $C_n$.

• *Centroid Condition:*

$$C_n = \mathbf{U}_R \mathbf{I}_{Ntt \times Nr} \quad (18)$$

where $U_R$ is an eigenvector matrix of the sample covariance matrix R which is defined as:

$$\mathbf{R} = 1/N_{Rn} \sum_{Xm \in Rn} \mathbf{X}_m X_m^H \quad \text{where } N_{Rn} = |R_n| \quad (19)$$

provided that eigenvalues in the eigenvalue matrix $\Sigma_R$ of $\mathbf{R} = \mathbf{U}_R \sum_R \mathbf{U}_R^H$ are sorted in a descending order.

This condition means that the code $C_n$ of the encoding region $R_n$ should be the $N_r$ eigenvectors of the sample covariance matrix R corresponding to the $N_r$ largest eigenvalues. The centroid condition is designed to minimise the average distortion in the encoding region $R_n$, when $C_n^{opt}$ represents $R_n$.

This process is reproduced here for convenience.

$$C_n^{opt} = \arg\min_C 1/N_{Rn} \sum_{Xm \in Rn} d_c^2(\mathbf{X}_m, \mathbf{C})$$

$$= \arg\min_C 1/N_{Rn} \sum_{Xm \in Rn} \mathrm{tr}(\mathbf{I}_{Nr} - C^H X_m X_m^H \mathbf{C})$$

$$= \arg\max_C \mathrm{tr}(C^H \mathbf{RC}) \qquad (20)$$

Equation (18) is the optimum solution which minimises the average distortion.

The modified LBG VQ (mLBG VQ) design algorithm is an iterative algorithm which finds the solution satisfying the two optimality criteria mentioned herein above. The algorithm requires an initial codebook $C^{(0)}$. $C^{(0)}$ is obtained by the splitting of an initial code, which is the centroid of the entire training sequence, into two codes. The iterative algorithm runs with these two codes as the initial codebook.

The final two codes are split into four and the same process is repeated until the desired number of codes is obtained. The codebook design steps are as follows for given T and $\varepsilon > 0$. *"centroid(S)"* denotes the optimum code calculated for a given encoding region S.

1. <u>Preparation</u>

Let $N = 1$ and calculate $C_1^* = centroid(T)$

2. <u>Splitting</u>

For i = 1, 2,...,N set $C_i^0 = (1 + \varepsilon) C_i^*$, $C_{N+i}^{(0)} = (1 - \varepsilon) C_i^*$ and $N = 2N$

3. <u>Iteration</u>

Set the iteration index $k = 0$ and calculate $d_{c,\min}^{(0)}(C)$.

(a) Find $n^* = \mathrm{argmin}_{n \in \{1,...,N\}} d_c(X_m, C_n^{(k)})$ for

$m = 1,...,M$ and set $Q(X_m) = C_{n^*}^{(k)}$

(b) Update the codes by finding the centroid

$C_n^{(k+1)} = centroid(\{X_m : Q(X_m) = C_n^{(k)}\})$ for $n = 1,...,N$.

(c) set $k = k + 1$

(d) Calculate $d_{c,\min}^{(k)}(C)$ and if $d_{c,\min}^{(k)}(C) > d_{c,\min}^{(k-1)}(C)$ then save

$$d_{c,\min}^{(k)}\ (C)\ \text{ and }\ C_n^{(k)}\quad \text{for } n = 1,..., N \text{ and go back to step (a). Otherwise, go to step (e).}$$

(e) Set $C_n^{\star}\ =\ C_n^{(k-1)}$ for $n$ = 1, ..., $N$ as the final codes.

4. Repetition

Repeat steps 2 and 3 until the desired number of codes is obtained.

The minimum distances of the codebooks are collected in Table 1. It shows that the codebooks acquired by the modified LBG VQ algorithm have better distance properties than Grassmannian codebooks.

Simulations have been performed for the 2 BSs 200 - 2 MSs 100 and 3 BSs 200 - 2 MSs 100 cases. Two (three) BSs 200 are cooperating to transmit data signal for two MSs 100 through the same resources at the same time. Both BSs 200 and MSs 100 have a single antenna, so it yields 2 x 2 and 2 x 3 overall channel matrices, respectively.

SCMe is used for simulations and proposed methods are tested for the Urban Macro channel with mobile speed 10 m/s. The system performance is evaluated in terms of the received SINR (signal to interference plus noise) at the MS 100. Simulations are performed for 30000 channel realisations and the cumulative distribution function (cdf) at one MS 100 is obtained. OFDMA is assumed for data transmission scheme and the simulations focus on one subcarrier.

The transmit power at the BS 200 is set to be 10W and it is equally allocated to 1201 subcarriers. A section of a cooperative area (CA) topology in radio communications system 1000 is shown in Fig. 4. As in the conventional radio communications topology, one cell is composed of three sectors and the hexagonal area, which is composed of three sectors which are served by three BSs 200, forms a CA. Two MSs 100 in the CA are served by three BSs 200 simultaneously. In case of the 2 BSs - 2 MSs case, two BSs 200 which maintain the strongest two links with MSs 100 are chosen for downlink transmission.

The cell radius is 600 m and MSs 100 are equally distributed in the CA. The transmit zero-forcing filter formula follows (3), based on downlink channel information which are either perfect channel (pCh), or provided by downlink channel estimation method which are shared by BSs through prompt and error free backbone network (centralized CA, cCA), or acquired by the analogue pilot retransmission method (distributed CA, dCA), or captured and reconstructed by looking up n bit codebook (n bit channel quantization, nbCQ). BSs 200 are assumed to be aware of large-scale fading of the channel, and the channel quantization process (12) is based on true channel information. The codebooks are acquired by the modified LBG VQ algorithm. The feedback link is error free and delay free.

Fig. 5 shows the cdf of SINR for the 2 BSs - 2 MSs case. At 50% cdf, the 3 bit channel quantizer (3bCQ) shows 5.3dB gain over the analogue pilot retransmission case (dCA) and it is only 0.7dB away from the centralized CA (The channel matrix at MS 100 $\mathbf{H}_j$ ($j$ = 1, 2) is in this case a 2 x 1 complex vector and this is represented by a codebook of size $2^3$ = 8.

Compared with the channel quantization method, the resource efficient dCA case requires 3 pilot tones per MS 100 for FDD. Therefore, the proposed scheme outperforms the pilot retransmission method without requiring extra resource.

Fig. 6 deals with simulation results of the 3 BSs - 2 MSs case. 3bCQ, 4bCQ, and 5bCQ cases have 3.2dB, 5.0dB, and 6.1dB gains over dCA case, respectively. The proposed method is to quantize the channel matrix based on the chordal distance and the LBG VQ algorithm is modified as such. Conventional VQ methods use the Euclidean distance instead. A performance comparison result, between the subspace method and the conventional method using an Euclidean distance is shown in Fig.7. The Euclidean distance based CQ (*n*beCQ) adopts the Euclidean distance as a distance metric for channel quantization. Its optimality criteria for codebook construction are as follows:

• *Nearest Neighbour Condition:*

$$R_n\ =\ \{\mathbf{X}:\ ||\mathbf{X}\ -\ \mathbf{C}_n||^2\ \leq\ ||\mathbf{X}\ -\ \mathbf{C}_{n'}||^2,\ \forall n' \neq n\}\quad (21)$$

• *Centroid Condition:*

$$\mathbf{C}_n = \sum_{Xm \in Rn} \mathbf{X}_m / \sum_{Xm \in Rn} 1 \qquad (22)$$

The simulation result shows that subspace based CQ has substantial gain over Euclidean distance based CQ. At 50% cdf, 4bCQ and 5bCQ outperform 4beCQ and 5beCQ by 2.9 dB and 2.6 dB, respectively.

Although the invention has been described in terms of preferred embodiments and refinements described herein, those skilled in the art will appreciate other embodiments and modifications which can be made without departing from the scope of the teachings of the invention. All such modifications are intended to be included within the scope of the claims appended hereto.

## Claims

1. Method for providing feedback in a radio communications system (1000) between at least one mobile station (100) of a plurality of mobile stations and at least one base station (200) of a plurality of base stations, comprising the steps of:

   - measuring by said at least one mobile station (100), of at least one channel characteristic of a downlink channel;
   - quantising by said at least one mobile station (100), said at least one channel characteristic using at least one code selected from a codebook, said codebook comprising a plurality of codes, and
   - transmitting by said at least one mobile station (100), of information relating to said at least one selected code, said information being a subset of a group of parameters of said at least one selected code.

2. Method according to claim 1, wherein said subset is an index of said at least one selected code in said codebook.

3. Method according to any of one of the preceding claims, wherein said codebook satisfies a set of criteria.

4. Method according to claim 1, wherein said quantisation uses a subspace distance metric.

5. Method according to claim 1, wherein said at least one channel characteristic is at least one of the following: a channel quality indicator, a channel power indicator, a signal to interference plus noise power ratio measurement.

6. Mobile station (100) adapted for providing feedback in a radio communications system (1000) comprising means arranged to execute the steps of method claims 1 to 5.

7. Radio communications system (1000) comprising at least one mobile station according to claim 6.

8. Radio communications system (1000) according to claim 7, wherein said radio communications system (1000) comprises of at least one cooperative antenna system.

FIG 1

1000

100

200

200

100

100

200

100

200

# FIG 2

```
    ┌─────────┐
    │  BEGIN  │
    └─────────┘
         │
         ▼
    ┌─────────┐
    │ STEP 1  │
    └─────────┘
         │
         ▼
    ┌─────────┐
    │ STEP 2  │
    └─────────┘
         │
         ▼
    ┌─────────┐
    │ STEP 3  │
    └─────────┘
         │
         ▼
    ┌─────────┐
    │   END   │
    └─────────┘
```

# FIG 3

```
┌───────────────────────────┐
│          ┌──────┐         │
│          │      │~130     │
│          └──┬───┘         │
│             │             │
│          ┌──┴───┐         │
│      ┌───┤      │~120     │~100
│      │   └──────┘         │
│   ┌──┴───┐                │
│   │      │~110            │
│   └──────┘                │
└───────────────────────────┘
```

European Patent
Office

**EUROPEAN SEARCH REPORT**

Application Number

EP 07 00 3817

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/155533 A1 (LIN XINTIAN E [US] ET AL) 13 July 2006 (2006-07-13) * paragraphs [0002], [0003] * ----- | 1-8 | INV. H04Q7/38 |
| X | US 2007/041429 A1 (KHANDEKAR AAMOD [US]) 22 February 2007 (2007-02-22) * paragraphs [0005], [0008], [0040], [0048], [0049] * ----- | 1-8 | |
| X | US 2006/270360 A1 (HAN JIN-KYU [KR] ET AL) 30 November 2006 (2006-11-30) * abstract * * paragraphs [0003], [0006], [0001] - [0011], [0018], [0019], [0023] - [0025], [0030], [0031], [0061], [0066] - [0068], [0072], [0073] * * paragraphs [0104], [0132] * ----- | 1-8 | |

| | | | TECHNICAL FIELDS SEARCHED (IPC) |
|---|---|---|---|
| | | | H04B H04Q |

The present search report has been drawn up for all claims

| Place of search | Date of completion of the search | Examiner |
|---|---|---|
| Munich | 20 July 2007 | Isopescu, Ciprian |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

...................................................................................
& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 07 00 3817

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2007

| Patent document cited in search report | | Publication date | Patent family member(s) | | Publication date |
|---|---|---|---|---|---|
| US 2006155533 | A1 | 13-07-2006 | US 2006155534 A1 | | 13-07-2006 |
| | | | WO 2006076213 A1 | | 20-07-2006 |
| US 2007041429 | A1 | 22-02-2007 | NONE | | |
| US 2006270360 | A1 | 30-11-2006 | WO 2006129958 A1 | | 07-12-2006 |
| | | | KR 20060124088 A | | 05-12-2006 |

EPO FORM P0459

For more details about this annex : see Official Journal of the European Patent Office, No. 12/82